# EUROPEAN PATENT APPLICATION

(11) **EP 2 656 740 A1**
(43) Date of publication of application: **30.10.2013**
(21) Application number: 12165741.5
(22) Date of filing: 26.04.2012
(51) Int. Cl.: A23L 1/315, A23L 1/317, A23L 1/325, A23L 1/314

(54) **Low sodium animal muscle derived product**

(71) Applicant: Nederlandse Organisatie voor Toegepast -Natuurwetenschappelijk Onderzoek TNO, 2628 VK Delft (NL)
(72) Inventor: Verkleij, Theodorus Jozef, 2628 VK Delft (NL); de Jong, Govardus Adrianus Hubertus, 2628 VK Delft (NL)
(74) Representative: Jansen, Cornelis Marinus

(57) **Abstract**

The invention is directed to an animal muscle derived product, a method to prepare such product and to a food product comprising such an animal muscle derived product.

The animal muscle derived product comprises myofibrils in a matrix, wherein the average w/w concentration of sodium cations in the myofibrils is lower than the average w/w concentration of sodium cations in the matrix. The method for preparing an animal muscle derived product comprises adding a first salt, different from a sodium salt, to an animal muscle derived product and thereafter adding sodium chloride to said animal muscle derived product.

## Description

The invention is directed to an animal muscle derived product, a method to prepare such product and to a food product comprising such an animal muscle derived product.

Reduction of the sodium content of animal muscle derived products, such as meat products, poultry products and fish products, is an important objective of the food industry, as high sodium intake contributes to hypertension and is associated with stroke and cardiovascular disease. Animal muscle derived food products contribute considerably to the total sodium intake.

At European level, a benchmark for overall salt reduction of a minimum of 16 % in 4 years against the individual baseline levels in 2008 has been established for all food products. For example for meat products, higher reduction targets are set. A sodium reduction targets for sausage of 34 % is set by the United Kingdom Food Standards Agency and of 42 % by the 2010 Health Check Canada criterion. A sodium reduction of 78 % is required for the claim "low sodium content" by Health Canada, use of the term "low sodium" in this application does not mean that this specific requirement is met.

Sodium content in animal muscle derived products is mainly due to sodium added during preparation of the products. For example, while the sodium content of unprocessed meat is mostly 50-80 mg Na / 100 g, the sodium content of processed meat products has increased to 500-2000 mg Na / 100 g (Pearson et al., Journal of Animal Science 1982, 54,1263-1278). Sodium is mostly added as sodium chloride. The amount of added sodium chloride is mostly 0.1-5 wt.% of total animal muscle derived product, with poultry and fish derived products often 0.1-1 wt.%, meat products mostly 1-5 wt.%, often 2-3 wt.%, dried or salted animal muscle derived products more than 5 wt.%.

Sodium chloride is typically added to animal muscle derived products during preparation in order to improve the taste, texture and shelf-life of the product. Addition of sodium chloride can cause an increase of the water binding capacity of the product, which can improve texture, toughness, juiciness, firmness, appearance, and functionality of the product. The increased water binding capacity may also contribute to an increased yield of cooked products.

According to Zayas, Functionality of proteins in food, Berlin: Springer 1996, 81-83, approximately 97 % of the water binding capacity of meat is related to the myofibrillar protein fraction and myofibrillar proteins comprise more than 55% of the total protein content of the muscular tissue. Myofibrils are the main component of animal muscle, occupying 70 % of the volume. Myofibrils comprise thick and thin filaments. These filaments are mainly composed of myofibrillar proteins myosin and actin. Water is retained in the spaces between the filaments. Zayas mentions that of 290-380 g water /100 g protein in muscle, only 40-80 g water / 100 g proteins is directly bound to proteins and the remaining 250-300 g water / 100 g proteins is retained in the tick and thin filament lattice.

Sodium chloride can also be added to promote the dissolution of proteins, more specifically the salt soluble proteins myosin and actin. In this way, the cohesion of ground animal muscular derived products can be increased. Also an emulsion can be obtained and after a heating step a gel.

Because of the many functions of sodium chloride in animal muscle derived products, reduction of the sodium content poses a challenge. This challenge specifically exists for meat products, fish products and poultry products.

Various methods for the production of animal muscle derived products with reduced sodium contents are known, including sodium replacement by substitutes, taste intensifiers, gradual sodium reduction over time, enhancing taste perception using aroma, colour, sound and texture, and sensory contrast.

One strategy is to use substitute salts, different from sodium salts, for sodium chloride, such as potassium, calcium, magnesium or ammonium chloride salts. However, products with these salts have an inferior taste; the taste is less salty and/or more bitter. Especially the bitter taste caused by the cations of these salts is undesirable. For this reason, sodium chloride can only be replaced to a limited extent by these salts without compromising the taste of the product.

An overview of various approaches for salt reduction in meat products is given in Conseil de la transformation agroalimentaire et des produits de consommation (CTAC), Reformulation of products to reduce sodium: Salt Reduction guide for the Food Industry, Édikom 2009, page 50.

Food products, including meat products, with reduced sodium content having a non-uniform sodium distribution are disclosed in WO-A-2009/108057. In these products, the salty taste is maintained with reduced sodium by the effect of the contrast in sodium content between parts of the product on taste perception. The products with high and low sodium parts are prepared of at least two portions differing in sodium content. This document does not disclose addition of sodium chloride after addition of a non-sodium substitute salt.

Rusuunen, et al., Meat Science 2005, 70, 531-541 mention that increased meat protein content reduces perceived saltiness. This document also discloses that sodium chloride has a more concentrated taste if it is sprinkled on cooked meat instead of on raw meat before cooking. This document does not disclose addition of sodium chloride after addition of a non-sodium substitute salt.

Objective of the inventors is to provide an animal muscular derived product with low sodium content, good taste and good water binding capacity; a method to prepare such product and a food product comprising such an animal muscle derived product.

The inventors surprisingly found that this objective can be met by an animal muscle derived product wherein sodium cations are distributed in the product in a specific manner.

Accordingly, in a first aspect, the invention relates to an animal muscle derived product, comprising myofibrils in a matrix, wherein the average w/w concentration of sodium cations in the myofibrils is lower than the average w/w concentration of sodium cations in the matrix.

In a second aspect, the invention relates to a method for preparing an animal muscle derived product, said method comprising (a) adding a first salt, different from a sodium salt, to an animal muscle derived product, and (b) thereafter adding sodium chloride to said animal muscle derived product.

In a third aspect, the invention further relates to an animal muscle derived product obtainable by such method and a food product comprising such an animal muscle derived product.

In a fourth aspect, the invention relates to a food product comprising or prepared from such an animal muscle derived product.

An advantage of the invention is that it allows for low sodium content in the animal muscle derived product while good taste and water binding capacity are maintained.

Without wishing to be bound by any theory, the inventors believe that the salty taste caused by addition of sodium chloride is mainly due to sodium cations in the matrix and that cations bound to myofibrillar proteins are immobilized and not available for taste during consumption. The increase in water binding capacity is partly due to chloride anions interacting with myofibrillar proteins, causing an increase in spacing between myofibrillar proteins. The cations also have an effect on the water binding capacity. In the animal muscle derived products according to the invention, the sodium concentration is relatively high in the matrix and relatively low in the myofibrils and a large part of the sodium cations contribute to the salty taste of the product. On the other hand, the concentration of cations different from sodium is relatively low in the matrix and relatively high in the myofibrils and these cations affect the taste of the product less.

At the same time, the water binding capacity of the animal muscle derived product is good.

Without wishing to be bound by any theory, the inventors believe that the cations of the first salt, different from a sodium salt, are bound to myofibrillar proteins and that the cations of the later added sodium chloride are therefore less or not bound to the myofibrillar proteins. The sodium cations remain in the matrix and contribute to the taste of the product animal muscle derived product. Without wishing to be bound by any theory regarding the nature of the interaction between the cations and myofibrillar proteins, it is believed that the binding is due to electrostatic interaction between the cations and negative charges on the myofibrillar proteins.

The distribution of the cations in the animal muscle derived product is mainly due to the distribution of the cations of the added salts, which is controlled by the described method.

The term "matrix" as used in this application is meant to refer to the part of the product other than myofibrils. The matrix is typically the aqueous phase.

The term "animal muscle derived product" is meant to refer to a product at least in part derived from an animal muscle, such as meat, fish, or poultry based product.

The term "adding" is used interchangeable with "contacting".

The term "first salt" is used interchangeable with "salt, different from a sodium salt, added in step (a)".

The water binding capacity (WBC) is defined as the amount of water that is bound by an animal muscle derived product. This results in the ability of an ingredient to contribute to the gel formation or firmness, when water has been added.

In the prior art the term water retention capacity is used synonymously, the term water holding capacity is also used. The water binding capacity of an animal muscle derived product can be measured as follows. An amount of a salt solution is added to an animal muscle derived product and the sample is mixed for a period. After this the sample is centrifuged. The supernatant is discarded and the pellet is weight. The weight of the pellet determines the water binding capacity.

Step (a) refers to adding a first salt, different from a sodium salt to an animal muscle derived product. Step (b) refers to adding after step (a) sodium chloride to said animal muscle derived product.

The abbreviation "w/w" means weight by weight.

The invention relates to an animal muscle derived product, comprising myofibrils in a matrix, wherein the average w/w concentration of sodium cations in the myofibrils is lower than the average w/w concentration of sodium cations in the matrix.

Preferably, the average w/w concentration of sodium cations in the myofibrils is 50 % or less, more preferably 25 % or less, most preferably 10 % or less of the average w/w concentration of sodium cations in the matrix.

The average w/w concentration of sodium cations in the myofibrils can be measured by atomic absorption spectroscopy after removing the matrix trough centrifugation.

The average w/w concentration of sodium cations in the matrix can be measured by atomic absorption spectroscopy after obtaining the matrix trough centrifugation

Preferably, at least 50 wt.%, more preferably at least 75 wt.%, most preferably at least 90 wt.% of total cations present in the myofibrils consist of cations selected from the group consisting of potassium, calcium, magnesium, ammonium. This provides the advantage that the cations in the myofibrils, which contribute relatively less to the taste of the animal muscle derived product, are, at least in part, not sodium cations. The amount of metal cations selected from said group can be measured using atomic absorption spectroscopy after removing the matrix through centrifugation.

Preferably, at least 50 wt.%, more preferably at least 75 wt.%, most preferably at least 90 wt.% of the cations present in the matrix is sodium cations. This provides the advantage that the cations present in the matrix contribute to the good taste of the animal muscle derived product.

Preferably, at 50 wt.% or more, more preferably 75 wt.% or more of total sodium cations in the animal muscle derived product is present in the matrix. This provides the advantage that a large part of the sodium cations contribute to the taste of the animal muscle derived product.

Preferably, the sodium content of the animal muscle derived product is 500 mg or less, more preferably 250 mg or less, most preferably 100 mg or less Na / 100 g animal muscle derived product, such as meat product.

The amount of sodium in the animal muscle derived product is preferably less than the amount of sodium conventionally present in the corresponding conventional animal muscle derived product. Preferably the animal muscle derived product will comprise at least 25 % w/w less sodium than conventionally present in the corresponding conventional animal muscle derived product. Said animal muscle derived product with reduced amount of sodium may comprise at least 25 % w/w, 30 % w/w, 35 % w/w or 40 % w/w less sodium, more preferably at least 45 % w/w, 50 % w/w, 55 % w/w or 60 % w/w less sodium than conventionally present in the corresponding conventional animal muscle derived product.

The amount of sodium conventionally present in the animal muscle derived product is the amount present when the animal muscle derived product has not been altered, processed or formulated in order to reduce its sodium content and will depend on the type of animal muscle derived product, hence the reference to a corresponding animal muscle derived product. Those skilled in the art know the amount of sodium which is conventionally present in an animal muscle derived product depending on the type of animal muscle derived product.

The animal muscle derived product comprises cations different from sodium cations. Preferably, the average w/w concentration of total cations different from sodium cations in the matrix is 50 % or less, more preferably 25 % or less, most preferably 10 % or less, of the average w/w concentration of total cations different from sodium cations in the myofibrils.

The animal muscle derived product may comprise one or more kinds of meat. The animal muscle derived product is preferably derived from, or comprises, one or more kinds of meat selected from the group consisting of beef, veal and pork.

The animal muscle derived product may further comprise fat, meat based fillers such as liver, heart, speel, trimming, collagen, brain, dried blood protein, giblets, and/or non-meat fillers. Examples of suitable non-meat fillers are vegetable protein like soya, pea, potato, animal protein like whey, egg, milk, carbohydrates from grain like wheat or soya, flour, breadcrumbs.

The animal muscle derived product can be a food product, an intermediate product in the preparation of a food product and/or can be comprised in a food product.

The animal muscle derived product can be an intermediate product in the preparation of food products. For example, the animal muscle derived product can be a meat-emulsion or batter used in the production of sausages such as frankfurter sausage, luncheon meat, grill sausage, smoked cooked sausage, liver sausage.

The animal muscle derived product can be or can be comprised in a heated or cooked food product such as lean cooked ham, cooked shoulder, and pork side cured and smoked.

The animal muscle derived product can be, or can be comprised in a food product that is not, or only to a limited extent, heated or cooked, such as Parma ham, Coburger ham, bacon, smoked beef, Salami, Chorizo .

The animal muscle derived product can be or can be comprised in poultry products such as chicken and turkey frankfurters; and fish products such as surimi.

The invention also relates to a food product, comprising the animal muscle derived product, preferably in the form of a sausage, frankfurter, ham, luncheon meat or heat gelled product. An emulsion of an animal muscle derived product, such as a meat emulsion, can be heated to obtain a gel, such a product is a heat gelled product.

The invention also relates to an animal muscle derived product separable in a protein fraction and a matrix fraction, such as a solution, dispersion, emulsion or batter of an animal muscle derived product, such as meat. Salt-soluble proteins, such as actin and myosin are comprised in the protein fraction. The myofibrils may be not intact in such animal muscle derived product. The matrix fraction is typically aqueous.

The sodium w/w concentration in the protein fraction, is preferably 50 % or less, more preferably 25 % or less, most preferably 10 % or less, of the sodium w/w concentration in the matrix fraction.

The w/w concentration of total cations different from sodium chloride in the matrix fraction is preferably 50 % or less, more preferably 25 % or less, most preferably 10 % or less of the w/w concentration of said cations in the protein fraction.

The protein fraction and the matrix fraction of the animal muscle derived product can be separated from each other by centrifugation, for example at 6000 rpm (rotations per minute) for 20 minutes, other by separation methods that use materials like paper to absorb non bound water.

The sodium w/w concentration of sodium in the protein fraction and in the matrix fraction can be measured by atomic absorption spectroscopy.

The w/w concentration of total different from sodium chloride in the matrix fraction and the w/w concentration of said cations in the protein fraction can be measured by atomic absorption spectroscopy.

The animal muscle derived product to which the first salt is added can consist for example of small particles in the size range 1 µm to 1 mm or large pieces or lumps in the size range 1 mm to 30 cm. The processing of the animal muscle derived product can be minimal prior to addition of the first salt, e.g. only cutting and/or resting.

The first salt cations and anions are preferably non-toxic. The first salt preferably comprises one or more cations selected from the group consisting of potassium, magnesium, calcium, and ammonium.

The first salt cation is preferably a divalent cation, because of the stronger electrostatic interaction with negatively charged myofibrillar proteins and because one divalent cation will be added per two monovalent anions. The first salt cation is more preferably calcium and/or magnesium, most preferably calcium.

The first salt preferably comprises one or more anions selected from the group consisting of chloride, nitrate, and nitrite. The first salt anion is more preferably chloride, as chloride is non-toxic and contributes to increased water binding capacity.

The first salt is preferably magnesium chloride or calcium chloride, most preferably calcium chloride. Calcium chloride is preferred because of its high water binding capacity.

The first salt can be comprised in a mixture of salts or be a mixture of salts other than sodium salts.

The first salt can be added in solution and/or as solid. The first salt can be added by methods such as injecting, mixing and/or contacting.

Before the addition of the first salt and/or simultaneously with the addition of the first salt, a small amount of sodium salts, including sodium chloride, can be added. For example 10 wt.% or less, 5 wt.% or less, 1 wt.% or less of the amount of sodium chloride added in step (b) can be added. Preferably, no sodium salts are added before the addition of the first salt and/or simultaneously with the addition of the first salt.

Step (a) is preferably adding an additive to an animal muscle derived product, wherein said additive comprises a first salt, different from a sodium salt, and wherein said additive essentially does not comprise a sodium salt. An additive that essentially does not comprise a sodium salt may comprise at most 1 wt.% sodium salts, such as at most 0.1 wt.%. Preferably, the additive is free of sodium salt. Use of such additive has the advantage that a better sodium ion distribution in the product is obtained.

The addition of sodium chloride contributes to the taste of the animal muscle derived product and may contribute to other properties, such as water binding capacity, texture and shelf life.

The sodium chloride can be added in solution and/or as a solid. The sodium chloride can be added by methods such as such as injecting, mixing and/or contacting. Injecting is preferred if the animal muscle derived product consists of large lumps.

Preferably, the amount of added sodium chloride is 0.1-3 wt.%, of total animal muscle derived product, more preferably 0.5-1.2 wt.%. These amounts provide good water binding capacity of the product.

Some additives may be added as sodium salt. Preferably, the added amount of such additives is small, as to not affect the sodium distribution in the animal muscle derived product. Preferably, the amount of sodium chloride added in step (b) is preferably 50 mol% or more, more preferably 90 mol% or more, most preferably 95 mol% or more of total sodium salts added.

Preferably, 0.5-4.5 g of said first salt per 100 g of animal muscle derived product is added in step (a), more preferably 0.5-2.5 g, more preferably 0.5-1 g. Alternatively, the amount of first salt added in step (a) corresponds to preferably 0.5-1.5 M for a monovalent salt, more preferably 0.6-1.0 M, most preferably 0.75-0.85 M for a monovalent salt and./or preferably half of said amount, most preferably 0.35-0.45 M for a divalent salt.

Preferably, 0.05-2.5 g sodium chloride per 100 g animal muscle derived product is added in step (b), more preferably 0.1-1 g. By addition of such amount of sodium chloride per kg animal muscle derived product in step (b), an animal muscle derived product with good taste is obtained.

The addition of the first salt results in an increase of the water binding capacity, after which the sodium chloride can be added.

The addition of sodium chloride can be less than 10 minutes, between 10-60 minutes, 1-6 hours, 6-24 hours, more than 24 hours after the addition of the first salt.

The time period between addition of the first salt in step (a) and the addition of sodium chloride in step (b) is dependent on the diffusion of the first salt into the myofibrils, which is dependent on the type of cation, the particle size of the animal muscle derived product, the salt concentration, temperature, etc. The addition of the sodium chloride in step (b) should be done when the texture of the animal muscle derived product after the addition of the first salt shows no rheological changes as for instance an increase in viscosity. At that moment equilibrium has been reached.

The water binding capacity of said animal muscle derived product is preferably increased with 50 % or more, more preferably 100 % or more, prior to step (b). In this way, a large part of the sodium cations contribute to the taste of the product. Alternatively, the water binding capacity of the animal muscle derived product is preferably 50 g water or more, more preferably 100 g water or more, per 100 g animal muscle derived product prior to step (b).

The method of the present invention can be used in combination with other methods to reduce the sodium content of animal muscle derived products, such as the addition of phosphates or taste improvers such as spices, and inhomogeneous sodium salt distributions.

The method can be a batch process or a continuous process.

Various process steps can be performed prior to the addition of the first salt, during addition of the first salt, between the addition of the first salt and the addition of sodium chloride, during the addition of sodium chloride and/or after the addition of the sodium chloride, or at any other moment in the process, such as mixing, resting, shaping, stuffing, cooling, freezing.

The product is preferably packaged after the addition of sodium chloride. The added sodium chloride preferably becomes part of the animal muscle derived product, for example by diffusion.

Various ingredients can be added prior to the addition of the first salt, during addition of the first salt, between the addition of the first salt and the addition of sodium chloride, during the addition of sodium chloride and/or after the addition of the sodium chloride, or at any other moment in the process, including sodium chloride in a limited amount, other sodium salts in a limited amount, other chloride salts, other salts such as nitrates and nitrites, citrates, ascorbates, monosodium glutamate; spices, sweeteners such as sugars, vegetable proteins such as soy proteins, milk proteins, starch, phosphates, , ice, water, and/or other ingredients, including those allowed under Regulation (EC) 1333/2008, OJ L354 of 31.12.2008.

The invention also relates to animal muscle derived products obtainable by any of the described methods. These products have advantageous sodium cation distribution and advantageous other cation distribution providing good taste and good water binding capacity even with low sodium content.

The invention will now be further illustrated by the following examples.

### Examples

Figure 1: Viscosity of meat extracts at a ½ dilution with water and varying salt concentrations (0.6-1.0 M NaCl). The viscosity (y-axis in units Pa·s) is depicted as a function of time (x-axis in seconds).
Figure 2: Viscosity of meat extracts at a ½ dilution with water and varying salt concentrations (0.3-0.5 M CaCl₂). The viscosity (y-axis in units Pa·s) is depicted as a function of time (x-axis in seconds).

### Experiment 1:

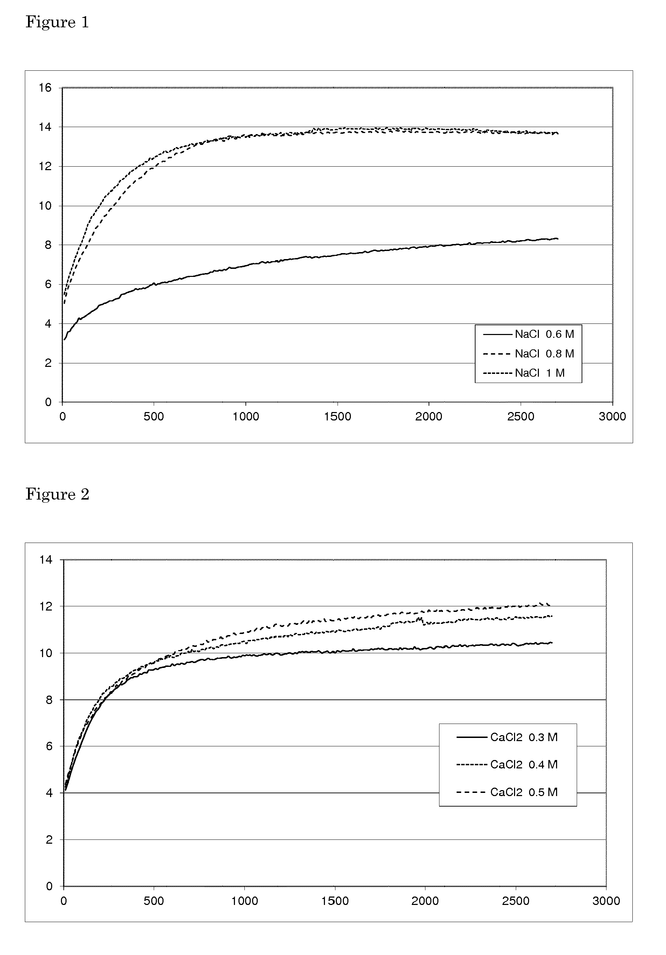

Meat was firstly reduced in size with a 3 mm Wolf. After this the meat was frozen using liquid nitrogen. The frozen meat was grinded in a steel vessel using the Grindomix GM200 (20 sec, 8500 rpm). 2 gram of a salt solution was added to 1 gram of the grinded meat and the sample at 0 °C was put directly in the rheometer. The viscosity was measured using the AR2000 rheometer. The following concentrations were used (0.6, 0.8 and 1 M NaCl (figure 1) and 0.3, 0.4 and 0.5M CaCl₂ (figure 2).

The samples with 0.8 and 1.0 M NaCl show a comparable viscosity, the sample with 0.6 M NaCl has a lower viscosity. The maximum viscosity at 0.8 M and 1.0 M NaCl is reached at around 1500 seconds; the maximum viscosity at 0.6 M NaCl is not reached at 2700 s. The viscosity at 0.5 M CaCl₂ is higher than at 0.3 and 0.4 M. Maximum viscosity for 0.3 M, 0.4 M and 0.5 M CaCl₂ is not reached at 2700 s. The final viscosity at 1 M NaCl is 14 Pa·s, this is higher than at 0.5 M CaCl₂, though it is possible that viscosity of the 0.5 M CaCl₂ reaches a similar value.

The viscosity indicates the water binding capacity, high viscosity means high water binding capacity of the sample. The viscosity in this experiment is indirectly caused by the water binding of the myofibrils. This water uptake results in the swelling of the myofibrils and a decrease of the amount of water in the matrix phase. The viscosity is the result of the friction between the swollen myofibril particles during movement in the rheometer.

## Claims

1. Animal muscle derived product, comprising myofibrils in a matrix, wherein the average w/w concentration of sodium cations in the myofibrils is lower than the average w/w concentration of sodium cations in the matrix.

2. Animal muscle derived product according to claim 1, wherein 50 wt.% or more of total cations present in the myofibrils consist of cations selected from the group consisting of potassium, calcium, magnesium, ammonium.

3. Animal muscle derived product according to claim 1 or 2, wherein 50 wt.% or more of total cations present in the matrix is sodium cations.

4. Animal muscle derived product according to any one of claims 1-3, wherein 50 wt.% or more of total sodium cations in the animal muscle derived product is present in the matrix.

5. Animal muscle derived product according to any one of claims 1-4, wherein the sodium content is 500 mg Na or less per 100 g of said animal muscle derived product.

6. Method for preparing an animal muscle derived product, preferably a product according to any one of claims 1-5, said method comprising adding a first salt, different from a sodium salt, to an animal muscle derived product and thereafter adding sodium chloride to said animal muscle derived product.

7. Method according to claim 6, wherein said first salt, different from a sodium salt, is a divalent cation salt, preferably calcium chloride.

8. Method according to any one of claims 6-7, wherein in step (a) an additive is added, wherein said additive comprises said first salt, different from a sodium salt, and wherein said additive essentially does not comprise a sodium salt.

9. Method according to any one of claims 6-8, wherein the amount of sodium chloride added in step (b) is 50 mol% or more of total sodium salts added.

10. Method according to any one of claim 6-9, wherein in step (a) 5-25 g of said first salt per kg animal muscle derived product is added, and in step (b) 5-25 g of sodium chloride per kg animal muscle derived product is added.

11. Method according to any one of claims 6-10, wherein the water binding capacity of said animal muscle derived product is increased with 50 % or more prior to step (b).

12. Animal muscle derived product obtainable by any method according to any one of claims 6-11.

13. Animal muscle derived product according to any one of claims 1-5 and 12 derived from beef, veal or pork.

14. Food product, comprising an animal muscle derived product according to any one of claims 1-5, 12 and 13, preferably in the form of a sausage, frankfurter, ham, luncheon meat or a heat gelled product.
